Europäisches Patentamt

European Patent Office

Office européen des brevets

(19)

(11) **EP 1 696 221 A1**

(12) **DEMANDE DE BREVET EUROPEEN**

(43) Date de publication:
**30.08.2006 Bulletin 2006/35**

(51) Int Cl.:
***G01N 3/36*** *(2006.01)*

(21) Numéro de dépôt: **06101716.6**

(22) Date de dépôt: **15.02.2006**

(84) Etats contractants désignés:
**AT BE BG CH CY CZ DE DK EE ES FI FR GB GR
HU IE IS IT LI LT LU LV MC NL PL PT RO SE SI
SK TR**
Etats d'extension désignés:
**AL BA HR MK YU**

(30) Priorité: **25.02.2005  FR 0501928**

(71) Demandeur: **VALLOUREC PRECISION SOUDAGE
59330 HAUTMONT (FR)**

(72) Inventeurs:
• **David, Francis
59330, Saint Rémy du Nord (FR)**
• **Delattre, Laurent
59300, Valenciennes (FR)**
• **Deshayes, Frédéric
51290, Moncetz l'Abbaye (FR)**

(74) Mandataire: **Pellicani, Félix Angelo et al
SETVAL
Division Propriété Industrielle
130 rue de Silly
92100 Boulogne-Billancourt (FR)**

(54) **Méthode de caractérisation en fatigue de profilés longilignes substantiellement creux**

(57) La méthode met en oeuvre une éprouvette (EP) issue du profilé et un moyen permettant d'exercer des efforts variables de traction et/ou de compression sur ladite éprouvette. L'éprouvette provient d'un tronçon du profilé et présente une section transversale correspondant à tout ou partie de la section transversale du profilé. Elle comprend une zone centrale (ZT) et deux zones opposées d'extrémités (ZE1, ZE2) décalées transversalement par rapport à la zone centrale (ZT). Les efforts de traction et/ou de compression sont appliqués sur les surfaces périphériques du profilé au niveau de chacune des zones opposées d'extrémités (ZE1, ZE2) de manière à solliciter en flexion variable la zone centrale (ZT) sous une contrainte σ d'amplitude déterminée.

L'invention concerne également un profilé auquel on associe pour au moins une des surfaces périphériques une valeur de limite de fatigue.

**Figure 1**

**Description**

La présente invention concerne une méthode de caractérisation en fatigue de profilés longilignes substantiellement creux.

On entend ici par profilés longilignes substantiellement creux tous types de composants dont la dimension prépondérante s'étend longitudinalement et dont la section est un profil fermé ou ouvert définissant une cavité intérieure. Ces profilés longilignes substantiellement creux sont caractérisés par une surface périphérique intérieure (peau intérieure) et une surface périphérique extérieure (peau extérieure), et ceux à profil fermé peuvent être notamment des tubes sans soudure ou soudés et à section cylindrique ou non.

Dans la suite du présent document, on utilisera le terme profilé pour désigner de tels profilés longilignes substantiellement creux.

Habituellement, les méthodes connues de caractérisation en fatigue de tels profilés sont réalisées sur des éprouvettes cylindriques ou sensiblement prismatiques prélevées le plus souvent dans le sens longitudinal desdits composants, le sens transversal étant généralement plus difficilement accessible. De tels essais sont relativement peu critiques vis-à-vis de particularités disposées dans le sens longitudinal des profilés (soudures, rayures, imperfections métallurgiques) et ne permettent pas forcément de tester les peaux des profilés. Il n'est en tout cas pas facile avec la même éprouvette de solliciter à la fois la peau extérieure et la peau intérieure. De plus, l'usinage de telles éprouvettes et l'aplatissement de leurs extrémités par les mors de la machine de fatigue lors de leur préhension, modifient l'état des contraintes desdits composants à tester et la détermination de leur limite de fatigue en est, par conséquent, altérée. Lorsque les profilés sont testés dans leur ensemble (c'est-à-dire sans prélèvement d'éprouvette), par exemple sur des bancs de torsion, les fréquences d'essai appliquées sont relativement faibles, de l'ordre de 3 Hz, et les essais peuvent alors prendre beaucoup de temps (plus de quatre jours pour un million de cycles).

La présente invention a pour but de proposer une méthode de caractérisation en fatigue de profilés qui s'affranchisse de ces inconvénients.

Selon un autre aspect de l'invention on a recherché une méthode permettant de caractériser en fatigue des profilés dès leur stade de fabrication avant leur mise en oeuvre.

La présente invention propose à cet effet, une méthode d'essai de fatigue mettant en oeuvre une éprouvette issue d'un profilé et un moyen permettant d'exercer des efforts variables de traction et/ou de compression sur ladite éprouvette. Ladite éprouvette provient d'un tronçon dudit profilé et présente une section transversale correspondant à tout ou partie de la section transversale dudit profilé. Ladite section comprend une zone centrale et deux zones opposées d'extrémités qui sont décalées transversalement par rapport à la zone centrale. Les efforts de traction et/ou de compression sont appliqués sur les surfaces périphériques au niveau de chacune des zones opposées d'extrémités de manière à ce que, la zone centrale de ladite éprouvette soit sollicitée en flexion variable sous une contrainte ou une déformation d'amplitude déterminée. La valeur de la contrainte peut être déterminée à partir de l'effort appliqué aux zones d'extrémités par tout moyen analytique (résistance des matériaux) ou numérique (calcul par éléments finis).

La méthode d'essai selon l'invention peut comporter des caractéristiques complémentaires qui peuvent être prises séparément ou en combinaison, et notamment :

- le moyen permettant d'exercer des efforts variables de traction et/ou de compression comprend un vérin hydraulique actionné par une servo-valve et une pompe.
- La section de l'éprouvette est adaptée et les efforts sont appliqués sur les zones opposées d'extrémités de manière à ce que la zone la plus contrainte de l'éprouvette soit la zone centrale de celle-ci.
- au moins un dispositif de fixation de l'éprouvette comprenant une liaison autorisant la rotation des extrémités de l'éprouvette lorsque les efforts de traction et/ou compression sont appliqués.
- le profilé est un profilé à section fermée et l'éprouvette est obtenue par la suppression d'un secteur de la section transversale dudit profilé à section fermée.
- la géométrie de l'éprouvette peut être sensiblement en forme de C.
- lorsqu'une différence de la distance entre les zones opposées d'extrémités de l'éprouvette est observée après la suppression du secteur, on exerce une précontrainte de traction ou compression sur lesdites zones opposées d'extrémités de l'éprouvette, de manière à compenser cette différence de distance.
- les efforts appliqués aux zones opposées d'extrémités de l'éprouvette sont des efforts cycliques alternés, chaque cycle comprenant alors une phase de traction et une phase de compression.
- l'amplitude de la phase de traction peut être au choix inférieure, supérieure ou égale à l'amplitude de la phase de compression.
- les efforts appliqués aux zones opposées d'extrémités de l'éprouvette sont des efforts cycliques répétés de traction pouvant passer par zéro ou en variante des efforts cycliques répétés de compression pouvant passer par zéro.

L'invention concerne également un profilé comprenant une surface périphérique intérieure et une surface périphérique extérieure.

Selon une caractéristique innovante, on associe à au moins une des surfaces périphériques du profilé une valeur de limite de fatigue (valeur dite encore de limite d'endurance), ladite valeur de limite de fatigue étant déterminée par une série d'essais effectués selon la méthode d'essai décrite dans la présente invention et étant la contrainte sur la surface périphérique correspondante en zone centrale d'éprouvette pour laquelle la probabilité de rupture par fatigue des éprouvettes pour un nombre donné élevé de cycles à rupture est de 50%.

A titre d'exemple on peut convenir que ledit nombre élevé de cycles à rupture est de un million.

Le profilé, selon l'invention, peut comporter des caractéristiques complémentaires qui peuvent être prises séparément ou en combinaison, et notamment :

- la valeur de la limite de fatigue de la surface périphérique extérieure du profilé est obtenue à partir d'une série d'essais en cycles alternés pour lesquels l'amplitude de la phase de traction est inférieure ou égale à l'amplitude de la phase de compression ou en cycles répétés de compression.
- la valeur de limite de fatigue de la surface périphérique intérieure du profilé est obtenue à partir d'une série d'essais en cycles alternés pour lesquels l'amplitude de la phase de traction est supérieure à l'amplitude de la phase de compression ou en cycles répétés de traction.
- on caractérise toute particularité de l'état de surface du profilé, comme par exemple une soudure ou une zone affectée thermiquement par une soudure, un défaut d'élaboration et/ou de procédé de fabrication dudit profilé (pailles, ségrégation, décarburation, rayures), en disposant ladite particularité dans la zone centrale de l'éprouvette de manière à tester son influence sur la limite de fatigue.
- il est possible de déterminer une valeur minimale de nombre de cycles à rupture en fatigue d'un ensemble de fabrications à partir d'une série d'essais de fatigue réalisés sur plusieurs lots de production dudit profilé sous une contrainte donnée en zone centrale d'éprouvette sur la surface périphérique correspondante.
- il est possible de déterminer une valeur minimale de limite de fatigue (ou d'endurance) d'un ensemble de fabrications à partir d'une série d'essais de fatigue réalisés sur plusieurs lots de production dudit profilé sous plusieurs contraintes d'essai, la limite minimale de fatigue étant la contrainte en zone centrale d'éprouvette sur la surface périphérique correspondante pour laquelle la probabilité de rupture par fatigue des éprouvettes pour un nombre donné élevé de cycles à rupture est voisine de 0%.

L'invention concerne aussi un procédé de contrôle de lot de fabrication de profilés dans lequel on réalise au moins un essai de fatigue selon la méthode d'essai décrite par la présente invention en appliquant à la zone centrale de l'éprouvette une contrainte qui correspond à un nombre de cycles à rupture minimal donné. Le nombre de cycles à rupture obtenu est alors comparé audit nombre de cycles à rupture minimal.

D'autres caractéristiques et avantages de l'invention apparaîtront à l'examen de la description détaillée ci-après, et des dessins annexés, sur lesquels :

- la figure 1 illustre de façon schématique un exemple de moyen permettant d'exercer des efforts variables de traction et/ou de compression, selon l'invention,
- la figure 2 illustre de façon schématique un exemple de géométrie d'éprouvette pour l'essai, selon l'invention,
- la figure 3 illustre de façon schématique un exemple de dispositif de fixation permettant de relier l'éprouvette au moyen d'exercer des efforts, selon l'invention,
- la figure 4 est une courbe de Wöhler illustrant le comportement en fatigue d'un lot de production de profilés avec la dispersion liée à la production de différents lots de profilés,
- Les figures 5a, 5b et 5c décrivent des profils fermés susceptibles d'être testés par la présente invention.
- Les figures 5d et 5e décrivent des profils ouverts susceptibles d'être testés par la présente invention.

Les dessins annexés pourront non seulement servir à compléter l'invention, mais aussi à contribuer à sa définition, le cas échéant.

Un mode de réalisation de l'invention est maintenant exposé qui met en oeuvre une machine de fatigue hydraulique et une série d'éprouvettes présentant une section sensiblement en forme de C et issues de tubes cylindriques. Les tubes peuvent avoir, par exemple, un diamètre compris entre 25 et 150 mm et des épaisseurs comprises entre 1 et 5 mm.

L'intérêt de tester un tube cylindrique réside dans ce qu'il s'agit d'un demi produit standard dont un certain nombre de particularités se retrouvent sur le produit fini après mise en oeuvre. Il peut donc être intéressant de caractériser le demi produit dès sa fabrication.

Bien sûr, d'autres types de profilés que des tubes cylindriques peuvent être testés et la forme de l'éprouvette varie alors avec celle du profilé.

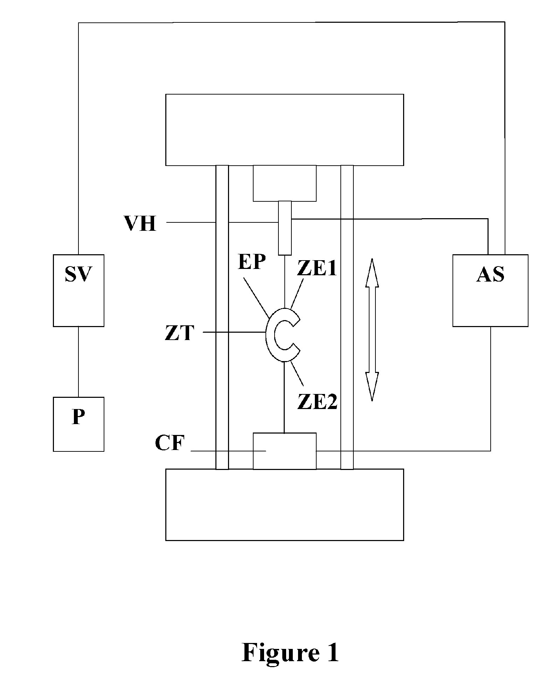

La machine de fatigue hydraulique, comme présentée sur la figure 1, est constituée d'un vérin hydraulique VH à déplacement axial vertical, d'un capteur de déplacement CD intégré dans le vérin, d'une servo-valve SV alimentée par une pompe P, d'un capteur de force CF et d'un asservissement AS du vérin en force ou en déplacement. La fréquence à laquelle peuvent être conduits les essais est par exemple de 35 Hz, ce qui permet de réaliser un million de cycles en huit heures. La force maximale qui peut être exercée par le vérin peut être choisie de 1kN à 100kN en fonction des caractéristiques mécaniques des profilés et de leurs dimensions.

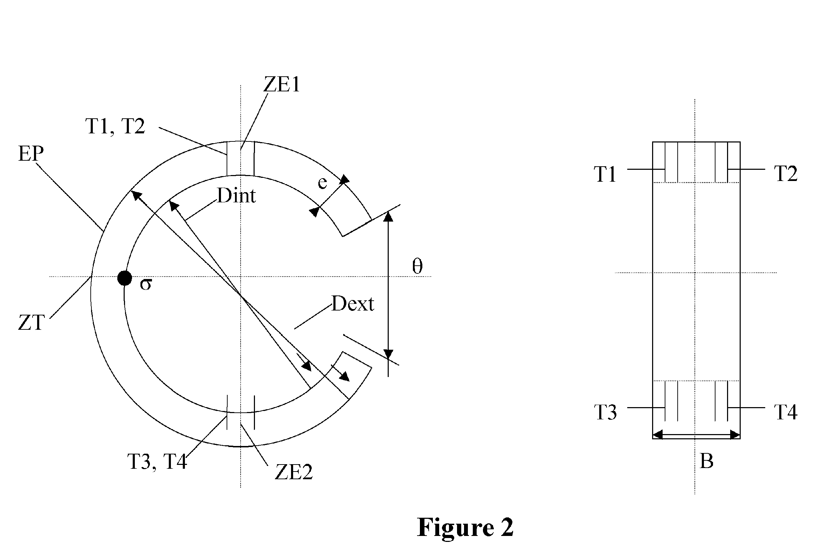

La figure 2 montre la section de l'éprouvette EP sensiblement en forme de C. Le diamètre d'une telle éprouvette EP est celui du tube à tester, tout comme son épaisseur e. La largeur B de ladite éprouvette EP est, par exemple, de 23 mm. Une zone à tester ZT, qui peut correspondre, le cas échéant, à une particularité du tube (cordon de soudure ou tout type d'imperfections) est alors définie. Une ouverture, correspondant à un angle au centre θ par exemple de 120°, est alors située à l'opposé de ladite zone à tester ZT. Des zones opposées d'extrémités ZE1, ZE2 de l'éprouvette situées sensiblement en regard à 90° et de part et d'autre de ladite zone à tester ZT sont définies. Dans chacune de ces dites zones opposées d'extrémités sont usinés des trous T1, T2, T3, T4 par exemple au nombre de deux.

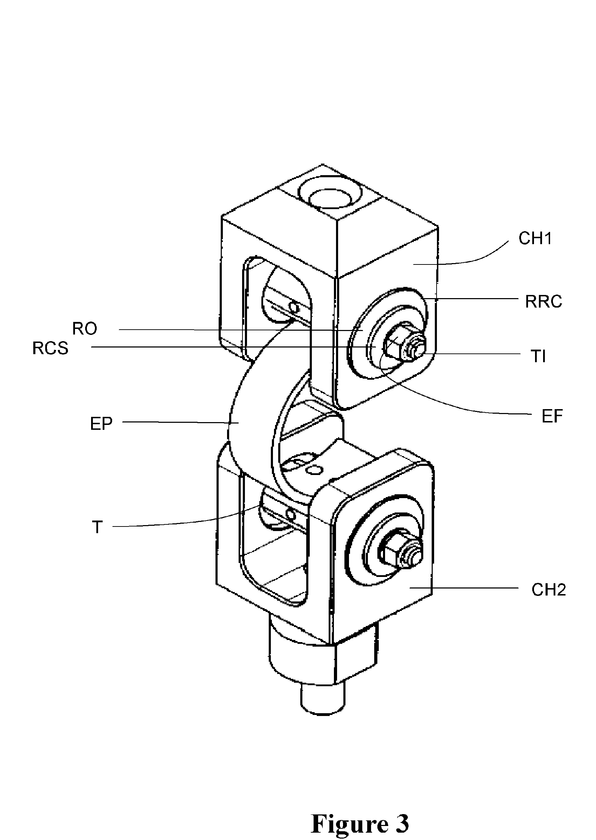

La figure 3 décrit un mode de fixation de l'éprouvette EP sur la machine de fatigue. Cette fixation se fait par l'intermédiaire de deux chapes (CH1, CH2) à l'intérieur desquelles vient s'encastrer une liaison pivot constituée de deux roulements à rouleaux coniques RRC, d'une première rondelle RO, d'une deuxième rondelle conique striée RCS permettant le serrage, d'une tige filetée TI et d'un écrou frein. Pour chaque chape, les bagues extérieures des roulements RRC sont emmanchées dans les trous des branches de la chape et les bagues intérieures sont emmanchées sur la tige filetée TI. L'extrémité de l'une des chapes CH1 est reliée au vérin hydraulique VH permettant ainsi la transmission des efforts de traction et/ou compression à l'éprouvette EP par un mouvement uniquement vertical. L'extrémité de l'autre chape CH2 est, quant à elle reliée, via le capteur de force, au bâti BA de la machine. L'axe de la tige filetée TI est percé de trous, par exemple au nombre de deux, pour permettre la fixation par des vis de l'éprouvette EP. La liaison pivot avec le vérin hydraulique VH autorise la libre rotation des zones opposée d'extrémités ZE1, ZE2 de l'éprouvette EP sans introduire de contraintes supplémentaires au niveau desdites zones.

D'autres modes de fixation n'introduisant pas de contraintes supplémentaires sont bien sûr envisageables.

Des viroles sont prélevées sur le tube à tester en vue d'obtenir les éprouvettes EP comme décrites sur la figure 2.

On définit une zone de test sur la périphérie de la virole qui sera la zone centrale ZT de l'éprouvette.

On perce les trous T1-T4 dans deux zones diamétralement opposées qui sont disposées circonférentiellement à 90° de la zone centrale ZT.

On effectue un contrôle dimensionnel des diamètres extérieur $D_{ext}$ et intérieur $D_{int}$ du tube au niveau des trous de fixation T1-T4 et de la zone centrale ZT. Le diamètre moyen ou à mi-épaisseur D de la virole est défini comme étant la somme du diamètre extérieur et du diamètre intérieur de la virole divisée par deux.

$$D = (D_{ext} + D_{int})/2$$

Une moyenne est alors calculée sur les valeurs de D pour les deux localisations (zones d'extrémités au niveau des trous de fixation T1-T4 et zone centrale de test ZT).

Puis, l'épaisseur e et la largeur B de la virole au niveau de la zone centrale ZT sont également contrôlées.

On calcule la force à appliquer F pour obtenir une contrainte σ donnée en peau intérieure ou extérieure dans la zone de test ZT selon la formule analytique suivante :

$$\sigma = F/Be + 3D/Be^2$$

La forme relativement simple de l'éprouvette en C permet en effet d'utiliser une formule analytique mais il est également possible d'utiliser la méthode des éléments finis pour déterminer la relation entre σ et F.

L'ouverture de la virole, permettant de lui donner sa forme en C, se fait alors par l'intermédiaire de la découpe d'un angle au centre de 120° situé à l'opposé de la zone de test ZT. Les deux tranches de l'éprouvette ainsi obtenue sont rectifiées pour éliminer tout défaut potentiel susceptible d'initier une rupture prématurée de l'éprouvette lors de l'essai de fatigue.

Un contrôle dimensionnel du diamètre de l'éprouvette EP au niveau des trous de fixations, qui correspond donc à la distance entre les zones opposées d'extrémités ZE1, ZE2 de l'éprouvette EP, est réalisé après ouverture. Dans le cas où une différence de diamètre est observée avant et après l'ouverture de la virole, on peut envisager de réaliser une mise en précontrainte de traction et/ou de compression sur les zones opposées d'extrémités ZE1, ZE2, à une valeur correspondant à ladite différence de diamètre.

L'éprouvette EP est fixée sur la machine de fatigue par l'intermédiaire de la liaison pivot décrite figure 3, et la charge est appliquée de façon à ce que le cycle de charge oscille, soit de façon alternée symétrique de part et d'autre des valeurs extrêmes +F et -F, soit de façon alternée dissymétrique entre les valeurs extrêmes +F et -k1.F ou entre les valeurs extrêmes +k2.F et-F, soit de façon répétée en traction entre k3.F et F, soit encore de façon répétée en compression entre -k4.F et -F, k1 et k2 étant positifs et inférieurs à 1, k3 et k4 étant positifs ou nuls et inférieurs à 1.

Les cycles alternés comprennent chacun une phase d'efforts de traction suivie d'une phase d'efforts de compression sur les zones opposées d'extrémités.

Les cycles répétés ne comprennent que des efforts de traction ou que des efforts de compression pouvant passer par la valeur zéro.

Pour solliciter une peau en particulier et y initier une fissure de fatigue, le type de cycle et la valeur de k1, k2, k3 ou k4 seront choisis judicieusement, la fissure de fatigue s'initiant sur la peau qui est soumise à la plus grande contrainte de traction.

Par exemple, pour solliciter en particulier la peau intérieure de l'éprouvette EP on peut choisir des cycles alternés dissymétriques et une valeur k1 inférieure à 1, de préférence inférieure ou égale à 0,8 et par exemple égale à 0,75 ou des cycles répétés en traction, notamment avec k3 = 0.

Pour solliciter en particulier la peau extérieure de l'éprouvette EP on peut choisir des cycles alternés symétriques ou dissymétriques avec une valeur de k2 inférieure à 1 ou des cycles répétés en compression, notamment avec k4 = 0.

Dans le cas d'une mise en précontrainte, l'oscillation de la sinusoïde se fait de part et d'autre de la précontrainte.

Plusieurs essais sont ainsi menés pour différentes charges jusqu'à rupture de l'éprouvette EP.

Le calcul de la limite de fatigue à un million de cycles du tube testé se fait selon les normes NF A03-400 et NF A03-405.

Le nombre N de cycles nécessaires pour obtenir la rupture permet de tracer la courbe $\sigma = f(\log N)$ dite courbe de Wöhler.

Cette courbe présente une asymptote horizontale d'ordonnée égale à la valeur de limite de fatigue.

La courbe partage alors le plan en deux régions : une région située au dessus de la courbe pour laquelle les éprouvettes sont rompues et une région située au dessous de la courbe pour laquelle les éprouvettes ne sont pas rompues. La courbe de Wöhler correspond donc à une probabilité de 50% d'avoir une rupture de fatigue pour une contrainte ou un nombre de cycles donnés.

La détermination de la courbe de Wölher et de la limite de fatigue peut être effectuée à l'aide d'outils statistiques comme le logiciel ESOPE commercialisé par la société ARCELOR.

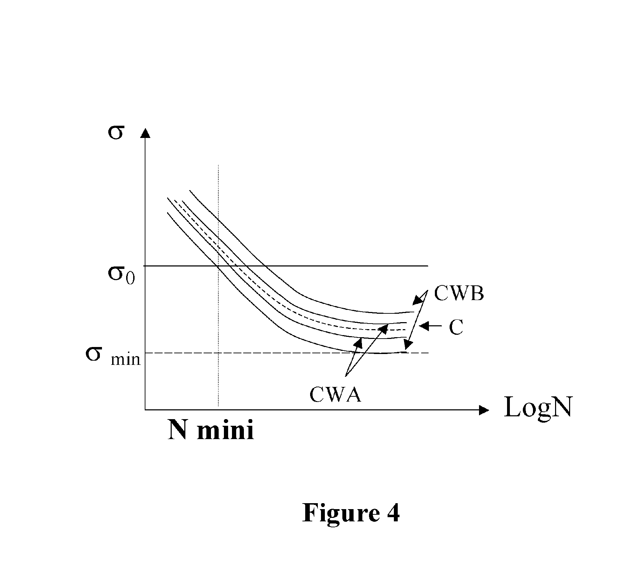

La courbe de Wöhler est ainsi obtenue pour un lot de production défini avec comme seuls paramètres influents : le matériau, le procédé de fabrication du tube et les particularités de la zone de test ZT. La dispersion des nombres de cycles à rupture obtenus lors des essais est donc considérée comme uniquement liée à l'essai de fatigue proprement dit. La courbe de Wöhler C et la bande CWA résultant de cette dispersion sont représentées sur la figure 4.

La dispersion liée au procédé de fabrication du tube est ensuite déterminée par la méthode de caractérisation décrite ci-après.

Pour une contrainte $\sigma_0$ donnée conduisant en moyenne à une rupture de l'éprouvette EP dans un nombre de cycles donnés, par exemple 400 000 cycles, des éprouvettes EP sont testées sur différents lots de fabrication, pour déterminer la dispersion de nombre de cycles à rupture liée au procédé de fabrication et déterminer une valeur minimale N mini de nombre de cycles à rupture. Pour cette valeur de contrainte $\sigma_0$ et ce nombre donné de cycles à rupture la probabilité de rupture d'éprouvettes issus de différents lots est sensiblement nulle.

En effectuant de tels essais pour plusieurs valeurs de contrainte d'essai ou encore en appliquant à la courbe de Wöhler C un modèle prenant en compte la dispersion à la contrainte $\sigma_0$, on obtient une dispersion de nombre de cycles à rupture qui est illustrée par la bande CWB représentée figure 4.

On peut alors déterminer la valeur minimale de limite de fatigue $\sigma_{min}$ pour un nombre de cycles à rupture donné élevé, par exemple pour un million de cycles. Pour cette valeur de contrainte $\sigma_{min}$ et ce nombre élevé de cycles à rupture la probabilité de rupture d'éprouvettes issus de différents lots est sensiblement nulle.

Des contrôles de suivi et/ou de qualité de production peuvent aussi être réalisés en choisissant sur la courbe de Wöhler minimale de la bande CWB décrite figure 4, un nombre de cycle minimum N mini, par exemple inférieur ou égal à 400 000 cycles, et la contrainte minimale $\sigma_0$ correspondante à appliquer à l'éprouvette. Le nombre de cycles à rupture obtenu est alors comparé à la valeur N mini précédemment choisi.

Une telle invention présente l'avantage par rapport à l'utilisation d'éprouvettes cylindriques de tester la surface des profilés et par rapport à l'utilisation d'éprouvettes sensiblement prismatiques de s'affranchir de l'introduction délibérée de contraintes engendrées par la réalisation de ce dernier type d'éprouvettes et de pouvoir ainsi tenir compte de l'influence réelle du procédé de fabrication des profilés.

L'éprouvette mise en oeuvre dans la présente invention, donne l'avantage d'être testée en sens transversal, permettant ainsi aux imperfections longitudinales typiques tels que pailles, replis, griffes ou encore rayures de s'ouvrir et de déterminer ainsi leur influence sur la tenue en fatigue dudit profilé.

Un autre avantage de la méthode selon la présente invention est pour la même éprouvette d'initier la fissure soit sur une peau extérieure soit sur une peau intérieure au choix de l'utilisateur de la méthode.

Encore un autre avantage de la présente invention est de localiser la contrainte de fatigue sur une zone précise du périmètre du profilé pour tester par exemple l'influence d'une particularité ou d'une imperfection sur la tenue en fatigue dudit profilé.

Pour un nombre de cycle identique, la réalisation des tests à des fréquences d'essais de 35 Hz est douze fois plus rapide que par les méthodes de test classiques, telle que la torsion à des fréquences d'essais de 3 Hz.

La méthode de caractérisation, décrite par la présente invention, permet également de déterminer une enveloppe minimale de tenue en fatigue pouvant servir de référence à un contrôle qualité du procédé de production desdits profilés.

La présente invention couvre également d'autres modes de réalisation que celui exposé ci-dessus.

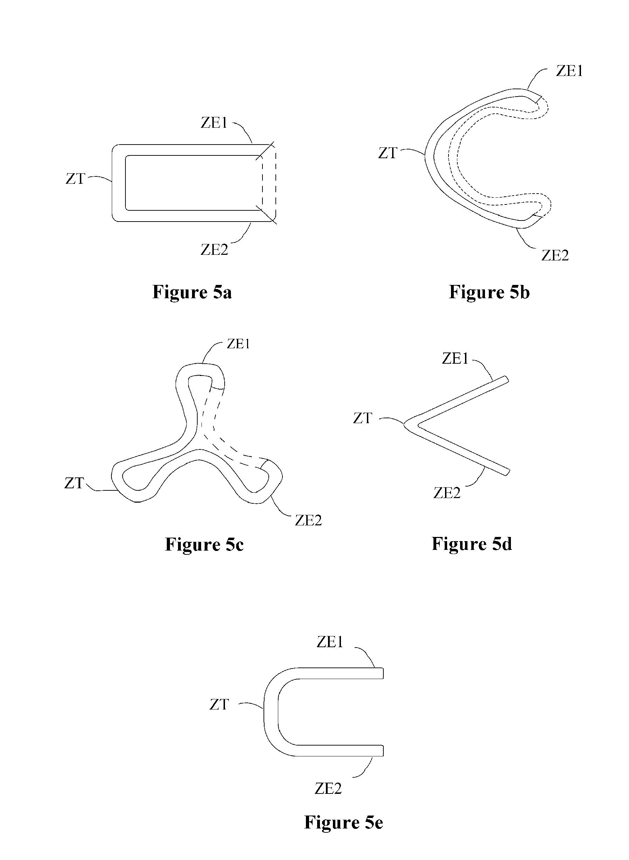

La méthode selon l'invention peut s'appliquer ainsi à d'autres types de profilés que les tubes décrits dans le mode de réalisation ci-dessus, notamment à des tubes de forme à section sensiblement carrée, rectangulaire ou autres, bruts de soudure ou mis en forme par tous moyens tels que, par exemple, l'étirage, le filage, l'hydroformage. Elle s'applique à des tubes déformés par exemple sensiblement en forme de U, en Y ou autres, notamment à des profils tubulaires présentant des ailes à double parois comme définis dans les brevets EP229576 ou EP743205. Les figures 5a, 5b et 5c qui reprennent les notations de la figure 2, montrent en pointillés les zones du profilé éliminées pour réaliser les éprouvettes. La présente invention s'applique également à des profilés creux ouverts à section sensiblement en forme de C, de U, de V ou autres. On peut voir des exemples de ces formes aux figures 5d et 5e qui reprennent également les notations de la figure 2. Dans le cas de formes relativement complexes, il est préférable de déterminer, pour la géométrie considérée, la relation entre $\sigma$ et F par les méthodes numériques telle que la méthode des éléments finis.

Le vérin d'essai peut également ne pas être disposé verticalement mais par exemple horizontalement. Il peut également être mécanique à commande électrique ou pneumatique.

La forme des cycles d'effort de traction et/ou compression peut ne pas être sinusoïdale mais par exemple carrée, rectangulaire, triangulaire, en dent de scie, trapézoïdale ou encore et plus généralement complexe.

**Revendications**

1. Méthode d'essai de fatigue de profilés longilignes substantiellement creux comprenant une surface périphérique intérieure et une surface périphérique extérieure mettant en oeuvre une éprouvette (EP) issue dudit profilé et un moyen permettant d'exercer des efforts variables de traction et/ou de compression sur ladite éprouvette, **caractérisée en ce que** ladite éprouvette provient d'un tronçon dudit profilé et présente une section transversale correspondant à tout ou partie de la section transversale dudit profilé comprenant une zone centrale (ZT) et deux zones opposées d'extrémités (ZE1, ZE2) décalées transversalement par rapport à la zone centrale (ZT), et **en ce que** les efforts de traction et/ou de compression sont appliqués sur les surfaces périphériques au niveau de chacune desdites zones opposées d'extrémités (ZE1, ZE2) de manière à solliciter en flexion variable la zone centrale (ZT) de l'éprouvette sous une contrainte $\sigma$ ou une déformation d'amplitude déterminée.

2. Méthode d'essai selon la revendication précédente, **caractérisée en ce que** le moyen permettant d'exercer des efforts variables de traction et/ou de compression comprend un vérin hydraulique VH actionné par une servo-valve (SV) et une pompe (P).

3. Méthode d'essai selon l'une des revendications précédentes, **caractérisée en ce que** la zone la plus contrainte de l'éprouvette (EP) est la zone centrale (ZT) de celle-ci.

4. Méthode d'essai selon l'une des revendications précédentes, **caractérisée en ce que** ladite éprouvette (EP) est reliée audit moyen permettant d'exercer les efforts par au moins un dispositif de fixation comprenant une liaison autorisant la rotation des zones opposées d'extrémités (ZE1, ZE2) de ladite éprouvette (EP) lorsque les efforts de traction et/ou compression sont appliqués.

5. Méthode d'essai selon l'une des revendications précédentes, **caractérisée en ce que** le profilé est un profilé à section fermée et **en ce que** l'éprouvette (EP) est obtenue par la suppression d'un secteur de la section transversale dudit profilé.

6. Méthode d'essai selon l'une des revendications précédentes, **caractérisée en ce que** ladite éprouvette (EP) est sensiblement en forme de C.

**7.** Méthode d'essai selon l'une des revendications précédentes, **caractérisée en ce que** lorsqu'une différence de distance entre les zones opposées d'extrémités (ZE1, ZE2) de ladite éprouvette (EP) est observée après la suppression dudit secteur, on exerce une précontrainte de traction et/ou de compression de manière à compenser cette différence de distance.

**8.** Méthode d'essai selon l'une des revendications précédentes, **caractérisée en ce que** les efforts appliqués aux dites zones opposées d'extrémités (ZE1, ZE2) sont des efforts cycliques alternés, chaque cycle comprenant une phase de traction et une phase de compression.

**9.** Méthode d'essai selon la revendication 8, **caractérisée en ce que** l'amplitude de la phase de traction est inférieure ou égale à l'amplitude de la phase de compression.

**10.** Méthode d'essai selon la revendication 8, **caractérisée en ce que** l'amplitude de la phase de traction est supérieure à l'amplitude de la phase de compression.

**11.** Méthode d'essai selon l'une quelconque des revendications 1 à 7, **caractérisée en ce que** les efforts appliqués aux dites zones opposées d'extrémités (ZE1, ZE2) sont des efforts cycliques répétés de compression pouvant passer par zéro.

**12.** Méthode d'essai selon l'une quelconque des revendications 1 à 7, **caractérisée en ce que** les efforts appliqués aux dites zones opposées d'extrémités (ZE1, ZE2) sont des efforts cycliques répétés de traction pouvant passer par zéro.

**13.** Profilé longiligne substantiellement creux comprenant une surface périphérique intérieure et une surface périphérique extérieure, **caractérisé en ce que** l'on associe à au moins l'une de ces surfaces périphériques une valeur de limite de fatigue obtenue par une série d'essais réalisés selon l'une des revendications précédentes et correspondant à la contrainte sur la surface périphérique correspondante en zone centrale (ZT) d'éprouvette pour laquelle la probabilité de rupture par fatigue des éprouvettes pour un nombre donné élevé de cycles à rupture est de 50%.

**14.** Profilé suivant la revendication 13, **caractérisé en ce que** la limite de fatigue de la surface périphérique extérieure est déterminée à partir d'une série d'essais réalisés suivant la revendication 9 ou 11.

**15.** Profilé suivant la revendication 13, **caractérisé en ce que** la limite de fatigue de la surface périphérique intérieure est déterminée à partir d'une série d'essais réalisés suivant la revendication 10 ou 12.

**16.** Profilé suivant l'une quelconque des revendications 13 à 15, **caractérisé en ce qu'**il comporte localement une particularité et **en ce que** la série d'essai est menée de manière à ce que ladite particularité soit disposée dans la zone centrale (ZT) de l'éprouvette (EP).

**17.** Profilé suivant l'une quelconque des revendications 13 à 16, **caractérisé par** une valeur minimale (N mini) de nombre de cycles à rupture en fatigue déterminée à partir d'une série d'essais réalisés suivant l'une quelconque des revendications 1 à 12 sur plusieurs lots de production dudit profilé sous une contrainte donnée en zone centrale (ZT) d'éprouvette sur la surface périphérique correspondante.

**18.** Profilé suivant l'une quelconque des revendications 13 à 17, **caractérisé par** une valeur minimale de limite de fatigue ($\sigma_{min}$) déterminée à partir d'une série d'essais réalisés suivant l'une quelconque des revendications 1 à 12 sur plusieurs lots de production dudit profilé sous une ou plusieurs contraintes données en zone centrale (ZT) d'éprouvette sur la surface périphérique correspondante.

**19.** Procédé de contrôle d'un lot de fabrication de profilés selon la revendication 17, **caractérisé en ce que** l'on réalise au moins un essai selon l'une des revendications 1 à 12 sous la contrainte ($\sigma_0$) et **en ce que** l'on compare le nombre de cycle à rupture obtenu à celui minimal (N mini).

**Figure 1**

**Figure 2**

**Figure 3**

**Figure 4**

ZE1

ZT

ZE2

**Figure 5a**

ZE1

ZT

ZE2

**Figure 5b**

ZE1

ZT

ZE2

**Figure 5c**

ZE1

ZT

ZE2

**Figure 5d**

ZE1

ZT

ZE2

**Figure 5e**

Office européen
des brevets

**RAPPORT DE RECHERCHE EUROPEENNE**

Numéro de la demande

EP 06 10 1716

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 5 280 730 A (PERES ET AL) 25 janvier 1994 (1994-01-25) * le document en entier * ----- | 1-19 | G01N3/36 |
| A | FR 2 240 448 A (REHM GALLUS,DT; REHM GALLUS) 7 mars 1975 (1975-03-07) * le document en entier * ----- | 1-19 | |
| A | FR 1 409 089 A (MASCHINENFABRIK AUGSBURG-NUERNBERG A. G) 20 août 1965 (1965-08-20) * le document en entier * ----- | 1-19 | |
| A | US 6 758 921 B1 (STREUBEL WOLFGANG ET AL) 6 juillet 2004 (2004-07-06) * le document en entier * ----- | 1-19 | |
| A | EP 0 647 537 A (PRE-STAR LIMITED) 12 avril 1995 (1995-04-12) * abrégé * * colonne 1, ligne 1 - colonne 3, ligne 1 * * colonne 3, ligne 34 - colonne 5, ligne 54; revendications 1-9,11; figures 1-11 * ----- | 1-19 | |
| A | EP 0 752 332 A (BENTELER AG) 8 janvier 1997 (1997-01-08) * le document en entier * ----- | 1-19 | |

| DOMAINES TECHNIQUES RECHERCHES (IPC) |
|---|
| G01N B21D B60B B60G C21D F16F |

Le présent rapport a été établi pour toutes les revendications

| Lieu de la recherche | Date d'achèvement de la recherche | Examinateur |
|---|---|---|
| Munich | 3 mars 2006 | Weaver, M |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
.................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 06 10 1716

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

03-03-2006

| Document brevet cité au rapport de recherche | | Date de publication | Membre(s) de la famille de brevet(s) | | Date de publication |
|---|---|---|---|---|---|
| US 5280730 | A | 25-01-1994 | DE | 69205711 D1 | 07-12-1995 |
| | | | EP | 0504012 A1 | 16-09-1992 |
| | | | FR | 2673723 A1 | 11-09-1992 |
| FR 2240448 | A | 07-03-1975 | IT | 1016799 B | 20-06-1977 |
| FR 1409089 | A | 20-08-1965 | AUCUN | | |
| US 6758921 | B1 | 06-07-2004 | AT | 300622 T | 15-08-2005 |
| | | | DE | 19941993 C1 | 14-12-2000 |
| | | | EP | 1081237 A2 | 07-03-2001 |
| | | | JP | 2001123227 A | 08-05-2001 |
| EP 0647537 | A | 12-04-1995 | GB | 2282580 A | 12-04-1995 |
| EP 0752332 | A | 08-01-1997 | CZ | 9601616 A3 | 15-01-1997 |
| | | | DE | 59500210 D1 | 05-06-1997 |
| | | | ES | 2101594 T3 | 01-07-1997 |

EPO FORM P0460

Pour tout renseignement concernant cette annexe : voir Journal Officiel de l'Office européen des brevets, No.12/82